# EUROPEAN PATENT SPECIFICATION

(11) **EP 4 102 391 B1**
(45) Date of publication and mention of the grant of the patent: **14.05.2025**
(21) Application number: 21887869.2
(22) Date of filing: 10.11.2021
(51) Int. Cl.: G06F 30/18, G06F 30/15, G06V 20/56, G06F 111/08

(54) **ROAD DATA PROCESSING METHOD AND APPARATUS, AND DEVICE AND STORAGE MEDIUM**
VERFAHREN UND VORRICHTUNG ZUR VERARBEITUNG VON STRASSENDATEN SOWIE VORRICHTUNG UND SPEICHERMEDIUM
PROCÉDÉ ET APPAREIL DE TRAITEMENT DE DONNÉES DE ROUTE, ET DISPOSITIF ET SUPPORT DE STOCKAGE

(30) Priority: 28.04.2021 CN 202110470264
(43) Date of publication of application: 14.12.2022
(73) Proprietor: Beijing Baidu Netcom Science Technology Co., Ltd., Beijing 100085 (CN)
(72) Inventor: LIU, Houkai, Beijing 100085 (CN); LI, Zhenan, Beijing 100085 (CN); ZHANG, Tianyu, Beijing 100085 (CN); DENG, Xiliang, Beijing 100085 (CN); JIANG, Bing, Beijing 100085 (CN)
(74) Representative: Weickmann & Weickmann PartmbB
(86) International application number: PCT/CN2021/129886
(87) International publication number: WO 2022/227487

(56) References cited:
- CN-A- 108 664 016
- CN-A- 110 389 995
- CN-A- 112 257 772
- CN-A- 113 139 258
- US-A1- 2020 132 476
- US-A1- 2021 041 880
- ARMAN MOHAMMAD ALI ET AL: "Road centreline and lane reconstruction from pervasive GPS tracking on motorways", PROCEDIA COMPUTER SCIENCE, ELSEVIER, AMSTERDAM, NL, vol. 170, 1 January 2020 (2020-01-01), pages 434 - 441, XP086134157, ISSN: 1877-0509, [retrieved on 20200414], DOI: 10.1016/J.PROCS.2020.03.086
- E. UDUWARAGODA ET AL: "Generating lane level road data from vehicle trajectories using Kernel Density Estimation", 16TH INTERNATIONAL IEEE CONFERENCE ON INTELLIGENT TRANSPORTATION SYSTEMS (ITSC 2013), 9 October 2013 (2013-10-09), pages 384 - 391, XP055484997, ISSN: 2153-0009, DOI: 10.1109/ITSC.2013.6728262

## Description

This application claims priority to Chinese patent application No. 202110470264.3, titled "ROAD DATA PROCESSING METHOD AND APPARATUS, DEVICE, AND STORAGE MEDIUM" and filed with the China Patent Office on April 28, 2021.

### TECHNICAL FIELD

The present disclosure relates to the field of computer technology, and in particular, to the technical fields of intelligent transportation, cloud computing and spatiotemporal big data.

### BACKGROUND

At present, road data processing technologies have been widely used in construction, vehicle information, traffic and other businesses. For example, by comparing and observing the latest changes in road center points or road centerlines, effective construction information can be mined for operations. For another example, the vehicle information modification can be judged by the change of the road center points or the road centerlines. However, the accuracy of road center point data acquired by the existing method is not high, and it is difficult to meet the business needs.

ARMAN MOHAMMAD ALI ET AL: "Road centreline and lane reconstruction from pervasive GPS tracking on motorways", XP086134157 discloses an algorithm that is capable of identifying lanes in highway segments based on GPS trajectories collected by mobile phones. The algorithm consists of three main steps. First, nodes within the test site are identified, and the network is divided into segments. Second, the central line of each segment is identified based on a dissimilarity matrix computed based on Dynamic Time Warping criteria. Finally, the Gaussian Mixture Method is used to identify the lanes. This allows the width of the lanes to remain constant throughout the segment.

E. UDUWARAGODA ET AL: "Generating lane level road data from vehicle trajectories using Kernel Density Estimation", XP055484997 discloses a method that statistically mines Global Positioning System (GPS) trajectory data obtained from vehicles to generate a lane level digital map of the road. The proposed method is capable of generating a digital map of the road which contains lane centerlines. The proposed method is independent of the lane width, lane parallelism and can handle lane splits and merges.

US2021/041880A1 discloses a method for estimating a centerline of a road that separates traffic moving in opposite directions, including aggregating a data set from each of a plurality of vehicles traversing the road over a period of time as telemetry data. Each data set of the telemetry data indicates a location and a heading. The method includes clustering the data sets of the telemetry data based on the heading indicated by each data set, and identifying a separator to separate the data sets indicating a first heading from the data sets indicating a second heading, opposite to the first heading. The centerline is estimated based on applying a spatial smoothing to the separator.

### SUMMARY

The present disclosure provides a road data processing method and apparatus, a device, and a storage medium. The invention is defined by the appended claims.

According to an aspect of the present disclosure, a road data processing method is provided, including:
acquiring vehicle travelling trajectories of a road and a corresponding road unit in a road network;
establishing a road vertical line for the road unit, and determining points of intersection of the vehicle travelling trajectories and the road vertical line;
determining a width area of the road on the road vertical line according to position data of the points of intersection; and
determining a midpoint of the width area as a road center point corresponding to the road vertical line.

According to another aspect of the present disclosure, a road data processing apparatus is provided, including:
an acquisition unit configured for acquiring vehicle travelling trajectories of a road and a corresponding road unit in a road network;
a first determination unit configured for establishing a road vertical line for the road unit, and determining points of intersection of the vehicle travelling trajectories and the road vertical line;
a second determination unit configured for determining a width area of the road on the road vertical line according to position data of the points of intersection; and
a third determination unit configured for determining a midpoint of the width area as a road center point corresponding to the road vertical line.

According to another aspect of the present disclosure, an electronic device is provided, which includes:
at least one processor; and
a memory communicatively connected with the at least one processor, wherein
the memory stores instructions executable by the at least one processor, and the instructions, when executed by the at least one processor, enable the at least one processor to perform the road data processing method in any one of embodiments of the present disclosure.

According to another aspect of the present disclosure, there is provided a non-transitory computer-readable storage medium storing computer instructions, wherein the computer instructions, when executed by a computer, cause the computer to perform the road data processing method in any one of the embodiments of the present disclosure.

According to another aspect of the present disclosure, there is provided a computer program product including a computer program, wherein the computer program, when executed by a processor, implements the road data processing method in any one of the embodiments of the present disclosure.

An embodiment in the above application has the following advantage or beneficial effect: the accuracy of road center point data can be improved, thereby helping to improve the recall rate of road data mining business.

### BRIEF DESCRIPTION OF THE DRAWINGS

The drawings are used to better understand the scheme and do not constitute a limitation to the present disclosure, wherein:
FIG. 1 is a flowchart of a road data processing method according to an embodiment of the present disclosure;
FIG. 2 is a schematic diagram of a road network and vehicle travelling trajectories of a road data processing method according to another embodiment of the present disclosure;
FIG. 3 is a schematic flowchart of centerline data calculation of a road data processing method according to another embodiment of the present disclosure;
FIG. 4 is a flowchart of an image processing method according to another embodiment of the present disclosure;
FIG. 5 is a schematic flowchart of centerline data calculation of an image processing method according to another embodiment of the present disclosure;
FIG. 6 is a flowchart of an image processing method according to another embodiment of the present disclosure;
FIG. 7 is a schematic flowchart of centerline data calculation of an image processing method according to another embodiment of the present disclosure;
FIG. 8 is a schematic diagram of an index manager of an image processing method according to another embodiment of the present disclosure;
FIG. 9 is a schematic diagram of a road data processing apparatus according to an embodiment of the present disclosure;
FIG. 10 is a schematic diagram of a road data processing apparatus according to another embodiment of the present disclosure;
FIG. 11 is a schematic diagram of a road data processing apparatus according to another embodiment of the present disclosure;
FIG. 12 is a block diagram of an electronic device for implementing the embodiments of the present disclosure.

### DETAILED DESCRIPTION

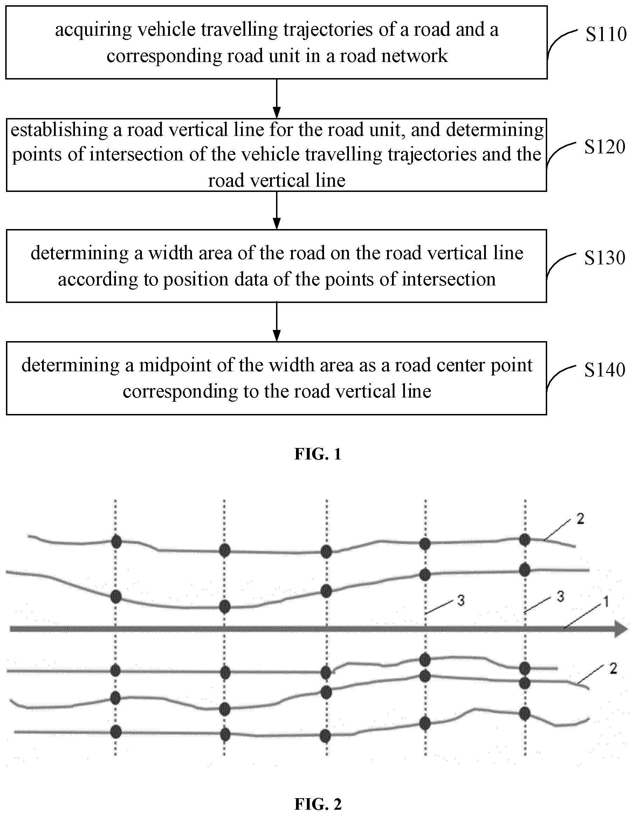

FIG. 1 is a flowchart of a road data processing method according to an embodiment of the present disclosure. Referring to Figure 1, the road data processing method may specifically include:
S110, acquiring vehicle travelling trajectories of a road and a corresponding road unit in a road network;
S 120, establishing a road vertical line for the road unit, and determining points of intersection of the vehicle travelling trajectories and the road vertical line;
S130, determining a width area of the road on the road vertical line according to position data of the points of intersection; and
S140, determining a midpoint of the width area as a road center point corresponding to the road vertical line.

In business scenarios such as construction, vehicle information, and traffic, accurate acquisition of center point data of real roads is helpful for the rapid development of road mining business and helps to improve the recall rate of road data mining business. In addition, the road centerline data can also be obtained according to the road center point data. In the technical fields of intelligent transportation and data mining technology, road centerline portrait is one of the most important basic data of road element mining technology. By comparing and observing the latest changes in the road centerlines, effective construction information can be mined for operation, and the comparing and observing the latest changes in the road centerlines can also be used to judge the vehicle information modification. For example, for a newly opened road, the road center point data and the road centerline data can be acquired through the acquired vehicle travelling trajectories, so as to acquire updated and accurate road data in real time. For another example, in a case where no vehicle travelling trajectory of a certain road can be acquired at the current moment, the center point data and the centerline data of the road cannot be obtained through data mining. In this case, the road may be in a blocking state at the current moment, and the latest state of the road can be updated in time on a map or other application scenarios.

In S110, on the one hand, the vehicle travelling trajectories on a certain road can be acquired in real time. For example, a vehicle travelling trajectory recording device installed on a vehicle side can upload the vehicle travelling trajectories to the server side in real time, and the server side can acquire the vehicle travelling trajectories on each road in real time. On the other hand, each road for vehicle travelling in an actual traffic scene has a corresponding Link (road unit) in a road network. The link is a line segment representing a road in the road network. For example, the Link can represent a straight road on the map, with no bifurcations. While the vehicle travelling trajectories of the road are acquired, the corresponding road unit in the road network can be acquired.

FIG. 2 is a schematic diagram of a road network and vehicle travelling trajectories of a road data processing method according to another embodiment of the present disclosure. In FIG. 2, the line segment with an arrow and numbered 1 represents a Link in the road network; the lines numbered 2 represent several vehicle travelling trajectories in the road corresponding to the Link. In S120, road vertical lines may be established for the Link in the road network. Referring to FIG. 2, vertical lines can be drawn for the line segment numbered 1. The dashed lines numbered 3 in FIG. 2 represent the road vertical lines established for the Link numbered 1. In an example, a series of road vertical lines can be established for each Link in the road network at equal intervals, to segment the Link. After the road vertical lines are established, the positions of the points of intersection of each vehicle travelling trajectory and all road vertical lines can be calculated. The solid circles in FIG. 2 represent the points of intersection of the vehicle travelling trajectories and the road vertical lines.

In S130, the position data of multiple points of intersection on the same road vertical line can be analyzed to determine the width area of the road at the position where the road vertical line is located. In S140, the midpoint of the width area determined in S130 is selected, and the midpoint of the width area is determined as the road center point corresponding to the road vertical line.

In the embodiment of the present disclosure, based on Link data of the road network, a series of road vertical lines are established for each Link, and the points of intersection of the vehicle travelling trajectory and the vertical line is calculated. For a large number of points of intersection of the same road vertical line, the width area of the road is determined according to the positions of the points of intersection, and the midpoint corresponding to the width area of the road is considered as the road center point corresponding to the road vertical line. The Link data of the road network is integrated with the real vehicle travelling trajectory data by using the above method, and the road center point is determined by using the position data of the points of intersection of the vehicle travelling trajectory and the road vertical line, which can improve the accuracy of the road center point data, thereby helping to improve the recall rate of the road data mining business.

In an implementation, the above method further includes:
connecting road center points corresponding to all road vertical lines of the road unit, to obtain a road centerline of the road unit.

Referring to FIG. 2, for each road vertical line on the same Link, the corresponding road center point can be obtained. The road centerline of the Link can be obtained by connecting the road center points corresponding to all the road vertical lines on the Link.

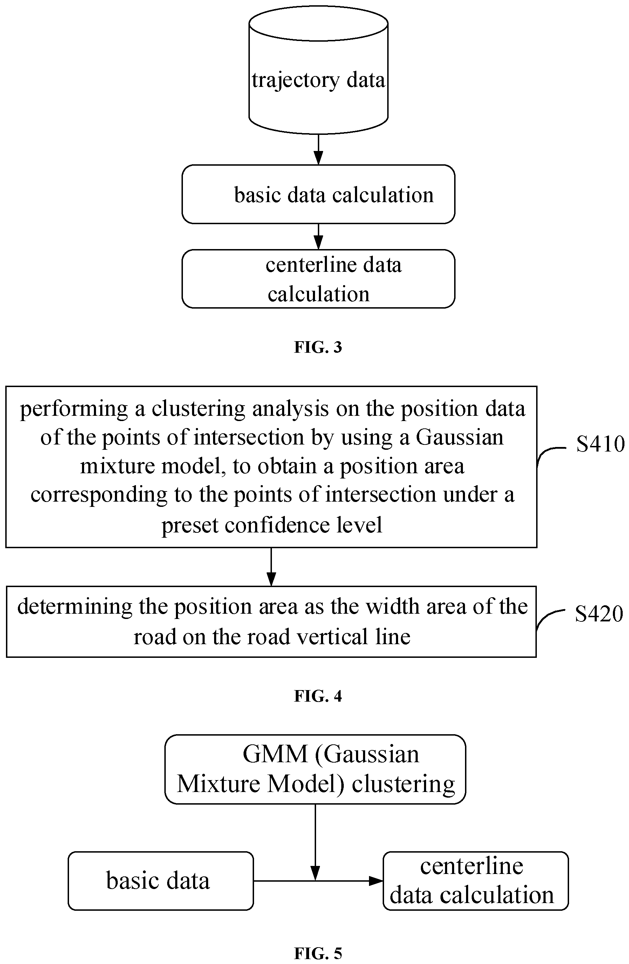

FIG. 3 is a schematic flowchart of centerline data calculation of a road data processing method according to another embodiment of the present disclosure. As shown in FIG. 3, basic data are calculated according to the acquired vehicle travelling trajectory data. Herein, the basic data include the position data of the points of intersection of the vehicle travelling trajectories and the road vertical line. Then, the road centerline data are calculated according to the basic data.

In the embodiment of the present disclosure, the road centerline can be determined according to the integration of the real-time vehicle travelling trajectory data and the Link data of the road network, which can improve the accuracy of the road centerline data, thereby helping to improve the recall rate of the road data mining business.

FIG. 4 is a flowchart of an image processing method according to another embodiment of the present disclosure. As shown in FIG. 4, in an implementation, in S130 in FIG. 1, the determining the width area of the road on the road vertical line according to the position data of the points of intersection, may specifically include:
S410, performing a clustering analysis on the position data of the points of intersection by using a Gaussian mixture model, to obtain a position area corresponding to the points of intersection under a preset confidence level; and
S420, determining the position area as the width area of the road on the road vertical line.

Herein, the Gaussian mixture model (GMM) is to use a Gaussian probability density function (normal distribution curve) to accurately quantify things. It is a model that decomposes things into several models based on the Gaussian probability density function (normal distribution curve).

In an example, the preset confidence level may be set to 90%. According to the normal distribution curve, in the example, the clustering analysis is performed on the points of intersection of the vehicle travelling trajectories and the road vertical line, and more than 90% of the points of intersection may be located in position areas on both sides of the points of intersection of the Link and the road vertical line. For example, more than 90% of the points of intersection may be within 5 meters of the vertical distance from the Link. Only a few 10% of the points of intersection are located far from the Link, and the vertical distances of these points of intersection from the Link may be more than 5 meters. The position areas are the confidence interval corresponding to the confidence level 90%. By performing the clustering analysis on the position data of a large number of points of intersection on a road vertical line, the confidence interval under the preset confidence level can be obtained, that is, the position area corresponding to the points of intersection under the preset confidence level. The position area may be determined as the width area of the road at the position where the road vertical line is located.

Referring to FIG. 2, in an example, in a case where the position coordinates of the point of intersection of the Link and the road vertical line are (5, 0), the width area of the Link at the position where the road vertical line is located may be the area where the line segment whose endpoints are (5, 5) and (5, -5) is located. In another example, in a case where the position coordinates of the point of intersection of the Link and the road vertical line are (10, 0), the width area of the Link at the position where the road vertical line is located may be the area where the line segment whose endpoints are (10, 4.5) and (10, -5.5) is located.

FIG. 5 is a schematic flowchart of centerline data calculation of an image processing method according to another embodiment of the present disclosure. Referring to FIG. 3 and FIG. 5, basic data are calculated by calculation according to the acquired vehicle travelling trajectory data. Herein, the basic data include the position data of the points of intersection of the vehicle travelling trajectories and the road vertical line. Then, GMM clustering is performed on the basic data, and the road centerline data are obtained by calculation.

In the embodiment of the present disclosure, the points of intersection of the vehicle travelling trajectories and the road vertical line are calculated by using a large amount of vehicle travelling trajectory data, and the GMM clustering is performed on the large number of points of intersection, to obtain the road centerline of the link. The above method improves the accuracy of road centerline data and improves the recall rate of the road data mining business.

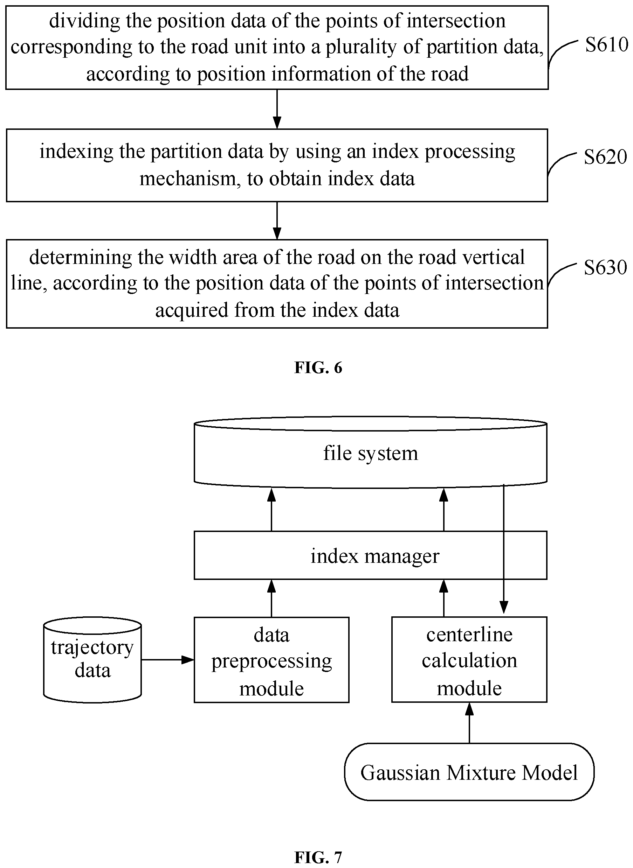

FIG. 6 is a flowchart of an image processing method according to another embodiment of the present disclosure. As shown in FIG. 6, in an implementation, the above method further includes:
S610, dividing the position data of the points of intersection corresponding to the road unit into a plurality of partition data, according to position information of the road;
S620, indexing the partition data by using an index processing mechanism, to obtain index data; and
S630: determining the width area of the road on the road vertical line, according to the position data of the points of intersection acquired from the index data.

In an example, S610 to S630 may be executed after S120 is executed. In S610 to S630, the position data of the points of intersection are indexed, and data can be quickly acquired from the indexed data, thereby improving system performance. Finally, S140 is executed to obtain the road center point corresponding to the road vertical line.

In the general architecture of road attribute mining in related technologies, hadoop-MR (Map Reduce) is used to calculate the road attributes in a specified area in batches offline. Herein, the hadoop-MR refers to a computing framework for distributed systems. After the road attributes are obtained by calculation, all results are stored in a distributed file system, such as a Hadoop Distributed File System (HDFS) or an Andrew File System (AFS), etc. However, the existing distributed file systems do not support fine-grained query of data, and usually require a method of global traversal of the entire dataset file for processing. For example, in the case of only needing to query the latest centerline data of a certain road, it is also necessary to submit a query task in the entire specified area to obtain the centerline data, and then use the traversal search method to query. Obviously, this method reduces the timeliness of fine-grained query of road attributes.

In order to realize the fine-grained query of data, an embodiment of the present disclosure provides a road attribute mining framework. By adding an index manager mechanism, a new data partition is established in combination with the characteristics of road spatial data, so as to realize the fast indexing function of the distributed file system. In an implementation, new data structure types may also be provided to support the indexing mechanism. The above method can realize high-performance and fine-grained calculation and query of road centerline data under massive trajectory big data, which can more flexibly and high-timeliness mine changes in road attributes, and promote the high availability of processing trajectory big data.

In the embodiment of the present disclosure, the calculation of the road centerline may be performed in units of Links. If only a small amount of vehicle travelling trajectory data are used, the accuracy of the calculation results cannot be guaranteed. In order to ensure the accuracy of depicting the road centerline, it is necessary to perform GMM clustering processing on a large number of trajectories. In an example, the vehicle travelling trajectory data of the same Link for N consecutive days may be acquired, so as to cluster the data of the same link. Herein, the value of N can be N>15. A specified area for data processing can be set on a map, for example, the specified area can be set as "part of the geographical areas of the whole country". There is a large amount of data on the daily vehicle travelling trajectories in the whole country, and the amount of data may be at a TB (terabyte) level. The existing databases have a small capacity and may not be able to support the storage and high-performance query of massive vehicle travelling trajectory data for multiple consecutive days.

To solve such problems, the embodiments of the present disclosure provide a new data storage method based on the characteristics of geospatial information. A specified area and surrounding partial areas are divided into a series of grid areas of rectangles with preset sizes. Herein, the grid area is also called as a picture frame. For example, in a case where the specified area is a "geographic area within the whole country", the whole country and surrounding partial areas can be divided into a series of square-sized grid areas with a side length of 20km, and respective grid areas are assigned a series of partition numbers, to achieve nationwide division. In an example, data for each grid area of the whole country may be saved to a file system by taking the date and partition number as a file name. For example, if the date is 20210101 and the partition number is 123, the file name can be "20210101_123". By dividing the position data of the points of intersection corresponding to the road unit into a plurality of partition data in the above manner, the day-level basic data can be stored in the file system in the form of picture frame division. The file system usually has a large capacity. By using the file system directly, the problem that the database cannot store national trajectory basic data for multiple days can be solved.

Since the file system does not support fine-grained query of data, in the embodiments of the present disclosure, the index processing mechanism is used to index partition data, to obtain index data. The position data of the points of intersection acquired from the index data can improve the timeliness of data query.

FIG. 7 is a schematic flowchart of centerline data calculation of an image processing method according to another embodiment of the present disclosure. As shown in FIG. 7, a data preprocessing module performs preprocessing on original vehicle travelling trajectory data. The preprocessing may include: calculating the points of intersection of vehicle travelling trajectories and a road vertical line, and dividing the position data of the points of intersection corresponding to the road unit into multiple partition data. An index manager is introduced in the embodiments of the present disclosure, which is used to index the data inside the partition, and can perform index management operations such as addition, deletion, persistence, etc. Referring to FIG. 7, the original vehicle travelling trajectory data are divided into multiple partition data after data preprocessing. The multiple partition data are then entered into the index manager, and the basic data in each partition are indexed in the index manager, to obtain index data. The index data are then stored in the file system. In a case where a centerline is calculated by using the Gaussian mixture model, the position data of the points of intersection of each road vertical line of each Link in each partition data is searched for from the file system through the index manager. The process of searching for data may include: in the first operation, a centerline calculation module first accesses the index manager; in the second operation, the centerline calculation module searches through the index manager for the position of the data required for the calculation in the file system; and in the third operation, the file system returns the data required for the calculation to the centerline calculation module.

The embodiments of the present disclosure solve the problem of timeliness of fine-grained query and improve the system performance, by dividing the specified range into multiple picture frame partitions to reduce the data volume size of each partition, and cooperating with the use of the index processing mechanism to acquire data quickly. In an example, in a case of querying for the attribute data of a certain road centerline, the one-time processing range can be extended to the range that can process data in recent months, and the accuracy of centerline data calculation can be improved by increasing the amount of data, thereby improving the recall rate of the business strategy.

In an implementation, the indexing the partition data by using the index processing mechanism, to obtain the index data, includes:
indexing the partition data by taking an identification of the road unit and a subscript corresponding to the road unit in the partition data as a key-value pair.

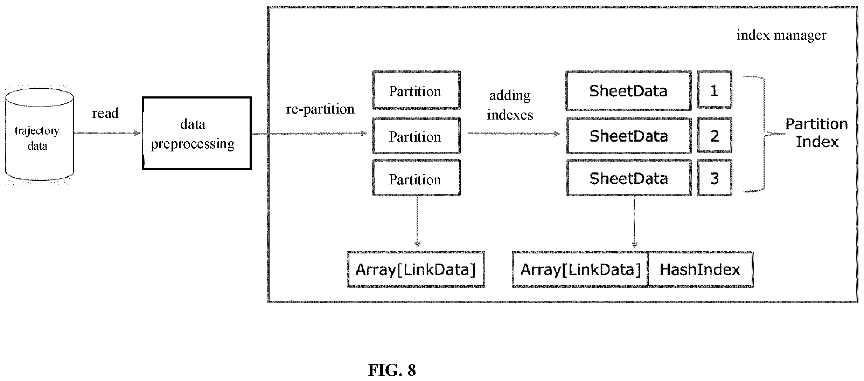

FIG. 8 is a schematic diagram of an index manager of an image processing method according to another embodiment of the present disclosure. As shown in FIG. 8, in order to meet the needs of indexing the partition data, optionally, the basic data can be formatted as LinkData type in each partition (Partition). In an example, the data format of the LinkData is: [Linkid, x, y, t, ...]. The LinkData data may include point of intersection information of multiple points of intersection in the Link. Herein, Linkid represents the identification of the Link; x represents the latitude coordinate of the point of intersection; y represents the longitude coordinate of the point of intersection; and t represents the time corresponding to the trajectory point, that is, the time when the trajectory point is generated. The entire partition data are saved in the form of Array[LinkData]. Herein, Array represents an array. An element in the array is used to store the data corresponding to a Link.

In an example, in order to improve the performance of querying Link attribute data, the Linkid of each LinkData can be taken as a Key value, the Array subscript corresponding to the LinkData can be taken as a value, and a key-value pair can be composed of the Key and the value. Hash indexes are established inside the partition, to complete the indexing process of the data inside the partition. Referring to FIG. 8, the data set inside the entire partition is stored in the file system in the format of SheetData[HashIndex, Array[LinkData]] in the above manner, so as to complete the indexing of the partition data. Herein, SheetData represents the format of the index data; and HashIndex represents the hash index.

In the above example, the data can be queried through a Hash index function. The input of the Hash index function is the Key value, that is, the Linkid of each LinkData; and the output thereof is the value, that is, the Array subscript corresponding to the LinkData. When it is necessary to query the latest road centerline data of a certain Link, first, partition data corresponding to N consecutive days are read through the partition where the Link is located, and then, the Linkid corresponding to the Link is input into the Hash index function by using the Hash index function inside each partition, so that the Array subscript corresponding to the LinkData can be obtained. Through the above method, the required data can be quickly acquired.

In the embodiment of the present disclosure, through the HashIndex inside each partition, all basic data of the Link can be quickly acquired with the time complexity of O(1), and then the GMM model can be called to calculate the road centerline data. This process can realize minute-level query. Through Hash indexing, the query speed is improved, and the problem of low query performance is solved, enabling the business to support minute-level road centerline query, so that real road attributes and their changes can quickly and accurately described in map products.

In the road attribute mining architecture of the embodiment of the present disclosure, by establishing the index processing mechanism and modifying the data storage type, the retrieval performance of fine-grained data query is improved.

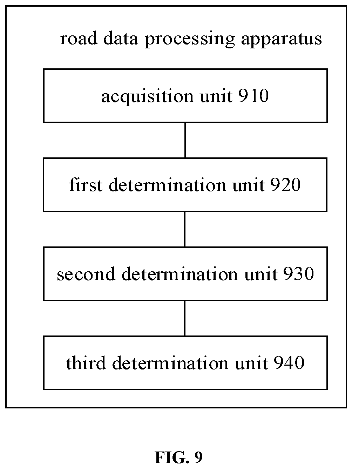

FIG. 9 is a schematic diagram of a road data processing apparatus according to an embodiment of the present disclosure. Referring to FIG. 9, the road data processing apparatus includes:
an acquisition unit 910 configured for acquiring vehicle travelling trajectories of a road and a corresponding road unit in a road network;
a first determination unit 920 configured for establishing a road vertical line for the road unit, and determining points of intersection of the vehicle travelling trajectories and the road vertical line;
a second determination unit 930 configured for determining a width area of the road on the road vertical line according to position data of the points of intersection; and
a third determination unit 940 configured for determining a midpoint of the width area as a road center point corresponding to the road vertical line.

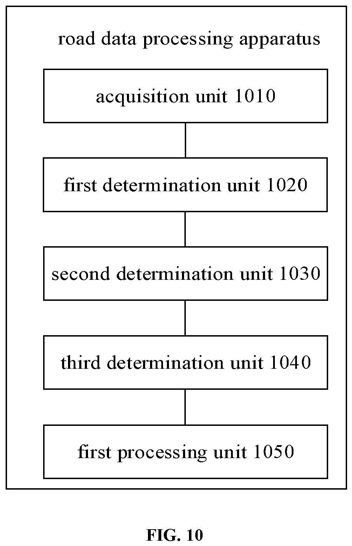

FIG. 10 is a schematic diagram of a road data processing apparatus according to another embodiment of the present disclosure. The road data processing apparatus includes an acquisition unit 1010, a first determination unit 1020, a second determination unit 1030, and a third determination unit 1040. The acquisition unit 1010, the first determination unit 1020, the second determination unit 1030, and the third determination unit 1040 in FIG. 10 are same as or similar to the acquisition unit 910, the first determination unit 920, the second determination unit 930, and the third determination unit 940 in FIG. 9. Referring to FIG. 10, in an implementation, the above-mentioned apparatus further includes a first processing unit 1050 configured for:
connecting road center points corresponding to all road vertical lines of the road unit, to obtain a road centerline of the road unit.

In an implementation, the second determination unit 1030 is configured for:
performing a clustering analysis on the position data of the points of intersection by using a Gaussian mixture model, to obtain a position area corresponding to the points of intersection under a preset confidence level; and
determining the position area as the width area of the road on the road vertical line.

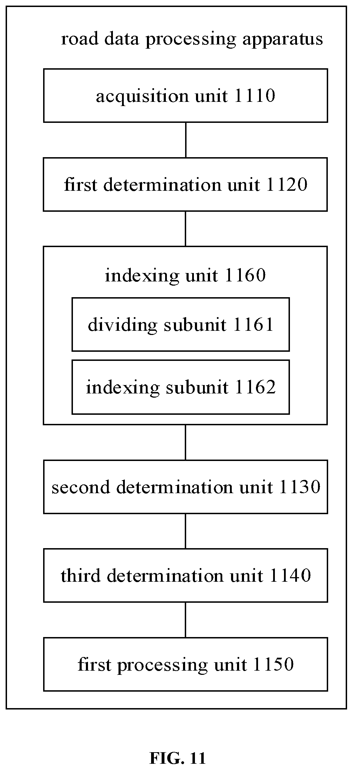

FIG. 11 is a schematic diagram of a road data processing apparatus according to another embodiment of the present disclosure. The road data processing apparatus includes an acquisition unit 1110, a first determination unit 1120, a second determination unit 1130, a third determination unit 1140, and a first processing unit 1150. The acquisition unit 1110, the first determination unit 1020, the second determination unit 1030, the third determination unit 1040, and the first processing unit 1150 in FIG. 11 are same as or similar to the acquisition unit 1010, the first determination unit 1020, the second determination unit 1030, the third determination unit 1040, and the first processing unit 1050 in FIG. 10. Referring to FIG. 11, the above-mentioned apparatus further includes an indexing unit 1160.

The indexing unit 1160 includes: a dividing subunit 1161 configured for dividing the position data of the points of intersection corresponding to the road unit into a plurality of partition data, according to position information of the road; and an indexing subunit 1162 configured for indexing the partition data by using an index processing mechanism, to obtain index data; and
the second determination unit 1130 is further configured for determining the width area of the road on the road vertical line, according to the position data of the points of intersection acquired from the index data.

In an implementation, the indexing subunit 1162 is configured for:
indexing the partition data by taking an identification of the road unit and a subscript corresponding to the road unit in the partition data as a key-value pair.

For the functions of respective units in the road data processing apparatus of the embodiments of the present disclosure, reference may be made to the corresponding descriptions in the above road data processing methods, and details are not repeated here.

According to embodiments of the present disclosure, the present disclosure also provides an electronic device, a readable storage medium, and a computer program product.

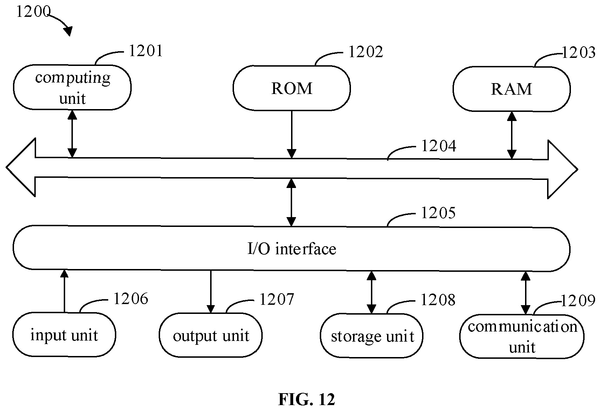

FIG. 12 shows a schematic block diagram of an example electronic device 1200 that may be configured to implement embodiments of the present disclosure. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as a personal digital assistant, a cellular telephone, a smart phone, a wearable device, and other similar computing devices. The components shown herein, their connections and relationships, and their functions are by way of example only and are not intended to limit the implementations of the present disclosure described and/or claimed herein.

As shown in FIG. 12, the electronic device 1200 includes a computing unit 1201 that may perform various suitable actions and processes in accordance with computer programs stored in a read only memory (ROM) 1202 or computer programs loaded from a storage unit 1208 into a random access memory (RAM) 1203. In the RAM 1203, various programs and data required for the operation of the electronic device 1200 may also be stored. The computing unit 1201, the ROM 1202, and the RAM 1203 are connected to each other through a bus 1204. An input/output (I/O) interface 1205 is also connected to the bus 1204.

A plurality of components in the electronic device 1200 are connected to the I/O interface 1205, including: an input unit 1206, such as a keyboard, a mouse, etc.; an output unit 1207, such as various types of displays, speakers, etc.; a storage unit 1208, such as a magnetic disk, an optical disk, etc.; and a communication unit 1209, such as a network card, a modem, a wireless communication transceiver, etc. The communication unit 1209 allows the electronic device 1200 to exchange information/data with other devices over a computer network, such as the Internet, and/or various telecommunications networks.

The computing unit 1201 may be various general purpose and/or special purpose processing assemblies having processing and computing capabilities. Some examples of the computing unit 1201 include, but are not limited to, a central processing unit (CPU), a graphics processing unit (GPU), various specialized artificial information (AI) computing chips, various computing units running machine learning model algorithms, a digital signal processor (DSP), and any suitable processor, controller, microcontroller, etc. The computing unit 1201 performs various methods and processing procedures described above, such as the road data processing method or the image processing method. For example, in some embodiments, the road data processing method or the image processing method may be implemented as computer software programs that are physically contained in a machine-readable medium, such as the storage unit 1208. In some embodiments, some or all of the computer programs may be loaded into and/or installed on the electronic device 1200 via the ROM 1202 and/or the communication unit 1209. In a case where the computer programs are loaded into the RAM 1203 and executed by the computing unit 1201, one or more of operations of the above road data processing method or image processing method may be performed. Alternatively, in other embodiments, the computing unit 1201 may be configured to perform the road data processing method or the image processing method in any other suitable manner (e.g., by means of a firmware).

Various implementations of the systems and techniques described herein above may be implemented in a digital electronic circuit system, an integrated circuit system, a field programmable gate array (FPGA), an application specific integrated circuit (ASIC), an application specific standard product (ASSP), a system on a chip (SOC), a load programmable logic device (CPLD), a computer hardware, a firmware, a software, and/or a combination thereof. These various implementations may include an implementation in one or more computer programs, which can be executed and/or interpreted on a programmable system including at least one programmable processor; the programmable processor may be a dedicated or general-purpose programmable processor and capable of receiving and transmitting data and instructions from and to a storage system, at least one input device, and at least one output device.

The program codes for implementing the road data processing method or the image processing method of the present disclosure may be written in any combination of one or more programming languages. These program codes may be provided to a processor or controller of a general purpose computer, a special purpose computer, or other programmable data processing apparatus such that the program codes, when executed by the processor or controller, enable the functions/operations specified in the flowchart and/or the block diagram to be implemented. The program codes may be executed entirely on a machine, partly on a machine, partly on a machine as a stand-alone software package and partly on a remote machine, or entirely on a remote machine or server.

In the context of the present disclosure, the machine-readable medium may be a tangible medium that may contain or store programs for using by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination thereof. More specific examples of the machine-readable storage medium may include one or more wires-based electrical connection, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination thereof.

In order to provide an interaction with a user, the system and technology described here may be implemented on a computer having: a display device (e. g., a cathode ray tube (CRT) or a liquid crystal display (LCD) monitor) for displaying information to the user; and a keyboard and a pointing device (e. g., a mouse or a trackball), through which the user can provide an input to the computer. Other kinds of devices can also provide an interaction with the user. For example, a feedback provided to the user may be any form of sensory feedback (e.g., visual feedback, auditory feedback, or tactile feedback); and an input from the user may be received in any form, including an acoustic input, a voice input or a tactile input.

The systems and techniques described herein may be implemented in a computing system (e.g., as a data server) that includes a background component, or a computing system (e.g., an application server) that includes a middleware component, or a computing system (e.g., a user computer having a graphical user interface or a web browser through which a user may interact with implementations of the systems and techniques described herein) that includes a front-end component, or a computing system that includes any combination of such background components, middleware components, or front-end components. The components of the system may be connected to each other through a digital data communication in any form or medium (e.g., a communication network). Examples of the communication network may include a local area network (LAN), a wide area network (WAN), and the Internet.

The computer system may include a client and a server. The client and the server are typically remote from each other and typically interact via the communication network. The relationship of the client and the server is generated by computer programs running on respective computers and having a client-server relationship with each other.

It should be understood that the operations can be reordered, added or deleted by using the various flows illustrated above. For example, the various operations described in the present disclosure may be performed concurrently, sequentially or in a different order, so long as the desired results of the technical solutions provided in the present disclosure can be achieved, and there is no limitation herein.

The above-described specific implementations do not limit the scope of the present disclosure. It will be apparent to those skilled in the art that various modifications, combinations, sub-combinations, and substitutions are possible, depending on design requirements and other factors. Any modifications, equivalent substitutions, and improvements within the principles of the present disclosure are intended to be included within the scope of the present disclosure.

## Claims

1. A road data computer implemented processing method, comprising:
acquiring a road unit in a road network and trajectories of vehicles travelling on a road represented by the road unit, wherein the road unit is a first line segment representing the road in the road network, the trajectories are included in vehicle trajectory data for a plurality of consecutive days through the road represented by the road unit;
establishing (S120) a road vertical line for the road unit, and determining points of intersection of the trajectories and the road vertical line, wherein the road vertical line belongs to a plane where the road unit and the trajectories are located, and the road vertical line is orthogonal to the road unit;
determining (S130) a width of the road on the road vertical line according to position data of the points of intersection, wherein the width is a second line segment extending along the road vertical line and intersecting with the road unit; and
determining (S140) a midpoint of the second line segment as a road center point corresponding to the road vertical line,
wherein the determining (S130) the width of the road on the road vertical line according to the position data of the points of intersection comprises: performing (S410) a clustering analysis on the position data of the points of intersection by using a Gaussian mixture model, to obtain a position area corresponding to the points of intersection under a preset confidence level; and determining (S420) the position area as the width of the road on the road vertical line,
wherein the method further comprises: dividing the position data of the points of intersection corresponding to the road unit into a plurality of partition data according to grid regions the position data of the points of intersection belong to, according to position information of the road; storing the position data of the points of intersection in a file system in a form of picture frame division; indexing the partition data in each partition by taking an identification of the road unit and a subscript corresponding to the road unit in the partition data as a key-value pair, to obtain index data; and determining (S630) the width of the road on the road vertical line, according to the position data of the points of intersection acquired from the index data.

2. The method of claim 1, further comprising:
connecting road center points corresponding to all road vertical lines of the road unit, to obtain a road centerline of the road unit.

3. A road data processing apparatus, comprising:
an acquisition unit (910, 1010, 1110) configured for acquiring a road unit in a road network and trajectories of vehicles travelling on a road represented by the road unit, wherein the road unit is a first line segment representing the road in the road network, the trajectories are included in vehicle trajectory data for a plurality of consecutive days through the road represented by the road unit;
a first determination unit (920, 1020, 1120) configured for establishing a road vertical line for the road unit, and determining points of intersection of the trajectories and the road vertical line, wherein the road vertical line belongs to a plane where the road unit and the trajectories are located, and the road vertical line is orthogonal to the road unit;
a second determination unit (930, 1030, 1130) configured for determining a width of the road on the road vertical line according to position data of the points of intersection, wherein the width is a second line segment extending along the road vertical line and intersecting with the road unit; and
a third determination unit (940, 1040, 1140) configured for determining a midpoint of the second line segment as a road center point corresponding to the road vertical line,
wherein the second determination unit (930, 1030, 1130) is further configured for: performing a clustering analysis on the position data of the points of intersection by using a Gaussian mixture model, to obtain a position area corresponding to the points of intersection under a preset confidence level; and determining the position area as the width of the road on the road vertical line,
wherein the apparatus further comprises an indexing unit (1160), the indexing unit (1160) comprises: a dividing subunit (1161) configured for dividing the position data of the points of intersection corresponding to the road unit into a plurality of partition data according to grid regions the position data of the points of intersection belong to, according to position information of the road, and storing the position data of the points of intersection in a file system in a form of picture frame division; and an indexing subunit (1162) configured for indexing the partition data in each partition by taking an identification of the road unit and a subscript corresponding to the road unit in the partition data as a key-value pair, to obtain index data; and the second determination unit (930, 1030, 1130) is further configured for: determining the width of the road on the road vertical line, according to the position data of the points of intersection acquired from the index data.

4. The apparatus of claim 3, further comprising a first processing unit (1050, 1150) configured for:
connecting road center points corresponding to all road vertical lines of the road unit, to obtain a road centerline of the road unit.

5. An electronic device, comprising:
at least one processor; and
a memory communicatively connected with the at least one processor, wherein
the memory stores instructions executable by the at least one processor, and the instructions, when executed by the at least one processor, enable the at least one processor to perform the method of any one of claims 1 to 2.

6. A non-transitory computer-readable storage medium storing computer instructions, wherein the computer instructions, when executed by a computer, cause the computer to perform the method of any one of claims 1 to 2.

7. A computer program product comprising a computer program, wherein the computer program, when executed by a processor, implements the method of any one of claims 1 to 2.

## Patentansprüche

1. Computerimplementiertes Straßendaten-Verarbeitungsverfahren, umfassend:
Aufnehmen einer Straßeneinheit in einem Straßen-Netzwerk und von Bahnkurven von Fahrzeugen, welche sich auf einer Straße bewegen, welche durch die Straßeneinheit repräsentiert wird, wobei die Straßeneinheit ein erstes Liniensegment ist, welches die Straße in dem Straßen-Netzwerk repräsentiert, wobei die Bahnkurven in Fahrzeug-Bahnkurvendaten für eine Mehrzahl von aufeinander folgenden Tagen durch die Straße umfasst sind, welche durch die Straßeneinheit repräsentiert ist;
Erstellen (S120) einer vertikalen Straßenlinie für die Straßeneinheit und Bestimmen von Punkten eines Schneidens der Bahnkurven und der vertikalen Straßenlinie,
wobei die vertikale Straßenlinie zu einer Ebene gehört, wo die Straßeneinheit und die Bahnkurven angeordnet sind und die vertikale Straßenlinie orthogonal zu der Straßeneinheit ist;
Bestimmen (S130) einer Breite der Straße an der vertikalen Straßenlinie gemäß Positionsdaten der Punkte des Schneidens, wobei die Breite ein zweites Liniensegment ist, welches sich entlang der vertikalen Straßenlinie erstreckt und mit der Straßeneinheit schneidet; und
Bestimmen (S140) eines Mittelpunkts des zweiten Liniensegments als einen Straßen-Mittelpunkt, welcher der vertikalen Straßenlinie entspricht,
wobei das Bestimmen (S130) der Breite der Straße an der vertikalen Straßenlinie gemäß den Positionsdaten der Punkte des Schneidens umfasst: Durchführen (S410) einer Cluster-Analyse auf die Positionsdaten der Punkte des Schneidens durch Verwenden eines Gauß'schen Mischungsmodells, um einen Positionsbereich zu erhalten, welcher den Punkten des Schneidens unter einem vorbestimmten Konfidenzniveau entspricht; und Bestimmen (S420) des Positionsbereichs als die Breite der Straße an der vertikalen Straßenlinie,
wobei das Verfahren ferner umfasst: Unterteilen der Positionsdaten der Punkte des Schneidens, welche der Straßeneinheit entsprechen, in eine Mehrzahl von Partitionsdaten gemäß Gitterregionen, zu welchen die Positionsdaten der Punkte des Schneidens gehören, gemäß Positionsinformationen der Straße; Speichern der Positionsdaten der Punkte des Schneidens in einem Dateisystem in einer Form einer Bildrahmen-Unterteilung; Indizieren der Partitionsdaten in jeder Partition durch Betrachten einer Identifikation der Straßeneinheit und einer Tiefstellung, welche der Straßeneinheit in den Partitionsdaten entspricht, als ein Schlüssel-Wert-Paar, um Indexdaten zu erhalten; und Bestimmen (S630) der Breite der Straße an der vertikalen Straßenlinie gemäß den Positionsdaten der Punkte des Schneidens, welche aus den Indexdaten erhalten werden.

2. Verfahren nach Anspruch 1, ferner umfassend:
Verbinden von Straßen-Mittelpunkten, welche allen vertikalen Straßenlinien der Straßeneinheit entsprechen, um eine Straßen-Mittellinie der Straßeneinheit zu erhalten.

3. Straßendaten-Verarbeitungsvorrichtung, umfassend:
eine Aufnahmeeinheit (910, 1010, 1110) welche zum Aufnehmen einer Straßeneinheit in einem Straßen-Netzwerk und von Bahnkurven von Fahrzeugen eingerichtet ist, welche sich auf einer Straße bewegen, welche durch die Straßeneinheit repräsentiert wird, wobei die Straßeneinheit ein erstes Liniensegment ist, welches die Straße in dem Straßen-Netzwerk repräsentiert, wobei die Bahnkurven in Fahrzeug-Bahnkurvendaten für eine Mehrzahl von aufeinander folgenden Tagen durch die Straße umfasst sind, welche durch die Straßeneinheit repräsentiert ist;
eine erste Bestimmungseinheit (920, 1020, 1120), welche zum Erstellen einer vertikalen Straßenlinie für die Straßeneinheit und Bestimmen von Punkten eines Schneidens der Bahnkurven und der vertikalen Straßenlinie eingerichtet ist, wobei die vertikale Straßenlinie zu einer Ebene gehört, wo die Straßeneinheit und die Bahnkurven angeordnet sind und die vertikale Straßenlinie orthogonal zu der Straßeneinheit ist;
eine zweite Bestimmungseinheit (930, 1030, 1130), welche zum Bestimmen einer Breite der Straße an der vertikalen Straßenlinie gemäß Positionsdaten der Punkte des Schneidens eingerichtet ist, wobei die Breite ein zweites Liniensegment ist, welches sich entlang der vertikalen Straßenlinie erstreckt und mit der Straßeneinheit schneidet; und
eine dritte Bestimmungseinheit (940, 1040, 1140), welche zum Bestimmen eines Mittelpunkts des zweiten Liniensegments als einen Straßen-Mittelpunkt eingerichtet ist, welcher der vertikalen Straßenlinie entspricht,
wobei die zweite Bestimmungseinheit (930, 1030, 1130) ferner eingerichtet ist zum: Durchführen einer Cluster-Analyse auf die Positionsdaten der Punkte des Schneidens durch Verwenden eines Gauß'schen Mischungsmodells, um einen Positionsbereich zu erhalten, welcher den Punkten des Schneidens unter einem vorbestimmten Konfidenzniveau entspricht; und Bestimmen des Positionsbereichs als die Breite der Straße an der vertikalen Straßenlinie,
wobei die Vorrichtung ferner eine Indizierungseinheit (1160) umfasst, wobei die Indizierungseinheit (1160) umfasst: eine Unterteilung-Untereinheit (1161), welche zum Unterteilen der Positionsdaten der Punkte des Schneidens eingerichtet ist, welche der Straßeneinheit entsprechen, in eine Mehrzahl von Partitionsdaten gemäß Gitterregionen, zu welchen die Positionsdaten der Punkte des Schneidens gehören, gemäß Positionsinformationen der Straße, und Speichern der Positionsdaten der Punkte des Schneidens in einem Dateisystem in einer Form einer Bildrahmen-Unterteilung; sowie eine Indizierung-Untereinheit (1162),welche zum Indizieren der Partitionsdaten in jeder Partition durch Betrachten einer Identifikation der Straßeneinheit und einer Tiefstellung, welche der Straßeneinheit in den Partitionsdaten entspricht, als ein Schlüssel-Wert-Paar eingerichtet ist, um Indexdaten zu erhalten; und die zweite Bestimmungseinheit (930, 1030, 1130) ferner eingerichtet ist zum Bestimmen der Breite der Straße an der vertikalen Straßenlinie gemäß den Positionsdaten der Punkte des Schneidens, welche aus den Indexdaten erhalten werden.

4. Vorrichtung nach Anspruch 3, ferner umfassend eine erste Verarbeitungseinheit (1050, 1150), welche eingerichtet ist zum:
Verbinden von Straßen-Mittelpunkten, welche allen vertikalen Straßenlinien der Straßeneinheit entsprechen, um eine Straßen-Mittellinie der Straßeneinheit zu erhalten.

5. Elektronische Vorrichtung, umfassend:
wenigstens einen Prozessor; und
einen Speicher, welcher kommunikativ mit dem wenigstens einen Prozessor verbunden ist, wobei der Speicher Anweisungen speichert, welche von dem wenigstens einen Prozessor ausführbar sind, und die Anweisungen, wenn sie von dem wenigstens einen Prozessor ausgeführt werden, den wenigstens einen Prozessor dazu befähigen, das Verfahren nach einem der Ansprüche 1 bis 2 durchzuführen.

6. Nichtflüchtiges computerlesbares Speichermedium, welches Computeranweisungen speichert, wobei die Computeranweisungen, wenn sie von einem Computer ausgeführt werden, den Computer dazu veranlassen, das Verfahren nach einem der Ansprüche 1 bis 2 durchzuführen.

7. Computerprogramm-Produkt, welches ein Computerprogramm umfasst, wobei das Computerprogramm, wenn es von einem Prozessor ausgeführt wird, das Verfahren nach einem der Ansprüche 1 bis 2 implementiert.

## Revendications

1. Procédé de traitement mis en œuvre par ordinateur de données routières, comprenant:
l'acquisition d'une unité routière dans un réseau routier et de trajectoires de véhicules circulant sur une route représentée par l'unité routière, où l'unité routière est un premier segment de ligne représentant la route dans le réseau routier, les trajectoires sont incluses dans des données de trajectoire de véhicules pour plusieurs jours consécutifs sur la route représentée par l'unité routière;
l'établissement (S120) d'une ligne verticale routière pour l'unité routière et la détermination de points d'intersection des trajectoires et de la ligne verticale routière, où la ligne verticale routière appartient à un plan où se trouvent l'unité routière et les trajectoires, et la ligne verticale routière est orthogonale à l'unité routière;
la détermination (S130) d'une largeur de la route sur la ligne verticale routière selon des données de position des points d'intersection, où la largeur est un second segment de ligne s'étendant le long de la ligne verticale routière et croisant l'unité routière; et
la détermination (S140) d'un point médian du second segment de ligne comme point central routier correspondant à la ligne verticale routière,
où la détermination (S130) de la largeur de la route sur la ligne verticale routière selon les données de position des points d'intersection comprend: la réalisation (S410) d'une analyse en clusters sur les données de position des points d'intersection à l'aide d'un modèle de mélange gaussien, pour obtenir une zone de positions correspondant aux points d'intersection avec un niveau de confiance prédéfini; et la détermination (S420) de la zone de positions comme largeur de la route sur la ligne verticale routière,
où le procédé comprend en outre: la division des données de position des points d'intersection correspondant à l'unité routière en plusieurs données de partition selon des régions de grille auxquelles appartiennent les données de position des points d'intersection, selon des informations de position de la route; le stockage des données de position des points d'intersection dans un système de fichiers sous forme de division de trames d'image; l'indexation des données de partition dans chaque partition en utilisant une identification de l'unité routière et un indice correspondant à l'unité routière dans les données de partition comme paire clé-valeur, afin d'obtenir des données d'index; et la détermination (S630) de la largeur de la route sur la ligne verticale routière, selon les données de position des points d'intersection acquises à partir des données d'index.

2. Procédé selon la revendication 1, comprenant en outre:
la liaison de points centraux routiers correspondant à toutes les lignes verticales routières de l'unité routière, pour obtenir une ligne médiane routière de l'unité routière.

3. Appareil de traitement de données routières, comprenant:
une unité d'acquisition (910, 1010, 1110) configurée pour acquérir une unité routière dans un réseau routier et des trajectoires de véhicules circulant sur une route représentée par l'unité routière, où l'unité routière est un premier segment de ligne représentant la route dans le réseau routier, les trajectoires sont incluses dans des données de trajectoire de véhicules pour plusieurs jours consécutifs sur la route représentée par l'unité routière;
une première unité de détermination (920, 1020, 1120) configurée pour établir une ligne verticale routière pour l'unité routière et déterminer des points d'intersection des trajectoires et de la ligne verticale routière, où la ligne verticale routière appartient à un plan où se trouvent l'unité routière et les trajectoires, et la ligne verticale routière est orthogonale à l'unité routière;
une seconde unité de détermination (930, 1030, 1130) configurée pour déterminer une largeur de la route sur la ligne verticale routière selon des données de position des points d'intersection, où la largeur est un second segment de ligne s'étendant le long de la ligne verticale routière et croisant l'unité routière; et
une troisième unité de détermination (940, 1040, 1140) configurée pour déterminer un point médian du second segment de ligne comme point central routier correspondant à la ligne verticale routière,
où la seconde unité de détermination (930, 1030, 1130) est en outre configurée pour: réaliser une analyse en clusters sur les données de position des points d'intersection à l'aide d'un modèle de mélange gaussien, pour obtenir une zone de positions correspondant aux points d'intersection avec un niveau de confiance prédéfini; et pour déterminer la zone de positions comme largeur de la route sur la ligne verticale routière,
où l'appareil comprend en outre une unité d'indexation (1160), l'unité d'indexation (1160) comprend: une sous-unité de division (1161) configurée pour diviser les données de position des points d'intersection correspondant à l'unité routière en plusieurs données de partition selon les zones de grille auxquelles appartiennent les données de position des points d'intersection, selon des informations de position de la route, et stocker les données de position des points d'intersection dans un système de fichiers sous forme de division de trames d'image; et une sous-unité d'indexation (1162) configurée pour indexer les données de partition dans chaque partition en utilisant comme paire clé-valeur une identification de l'unité routière et un indice correspondant à l'unité routière dans les données de partition, pour obtenir des données d'index; et la seconde unité de détermination (930, 1030, 1130) est en outre configurée pour: déterminer la largeur de la route sur la ligne verticale routière, selon les données de position des points d'intersection acquises à partir des données d'index.

4. Appareil selon la revendication 3, comprenant en outre une première unité de traitement (1050, 1150) configurée pour:
relier les points centraux routiers correspondant à toutes les lignes verticales routières de l'unité routière, pour obtenir une ligne médiane routière de l'unité routière.

5. Dispositif électronique comprenant:
au moins un processeur; et
une mémoire connectée de manière communicative avec le au moins un processeur, où
la mémoire stocke des instructions exécutables par le au moins un processeur, et lorsqu'elles sont exécutées par le au moins un processeur, les instructions permettent au au moins un processeur de mettre en œuvre le procédé selon l'une quelconque des revendications 1 à 2.

6. Support de stockage non transitoire lisible par ordinateur stockant des instructions informatiques, où les instructions informatiques, lorsqu'elles sont exécutées par un ordinateur, amènent l'ordinateur à mettre en œuvre le procédé selon l'une quelconque des revendications 1 à 2.

7. Produit programme informatique comprenant un programme informatique, où le programme informatique, lorsqu'il est exécuté par un processeur, met en œuvre le procédé selon l'une quelconque des revendications 1 à 2.
